## Europäisches Patentamt

## European Patent Office

## Office européen des brevets

(19)

(11)  **EP 0 518 150 B1**

(12)  **EUROPÄISCHE PATENTSCHRIFT**

(45) Veröffentlichungstag und Bekanntmachung des Hinweises auf die Patenterteilung:
**20.03.1996  Patentblatt 1996/12**

(51) Int Cl.⁶: **C08L 55/02**, C08K 7/14
// (C08L55/02, 35:06)

(21) Anmeldenummer: **92109190.6**

(22) Anmeldetag: **01.06.1992**

(54) **Verstärkte ABS-Formmassen**

Reinforced ABS moulding compositions

Masses à mouler ABS renforcées

(84) Benannte Vertragsstaaten:
**DE FR GB IT**

(30) Priorität: **14.06.1991  DE 4119669**

(43) Veröffentlichungstag der Anmeldung:
**16.12.1992  Patentblatt 1992/51**

(73) Patentinhaber: **BAYER AG**
**D-51368 Leverkusen (DE)**

(72) Erfinder:
- **Eichenauer, Herbert, Dr.**
  **W-4047 Dormagen 1 (DE)**
- **Frohberg, Ekkehard, Dr.**
  **W-5000 Köln 71 (DE)**
- **Lindner, Christian, Dr.**
  **W-5000 Köln 80 (DE)**

(56) Entgegenhaltungen:
**EP-A- 0 137 295          WO-A-91/15543**
**US-A- 3 642 949**

- **RESEARCH DISCLOSURE Bd. 321, Januar 1991, HAVANT GB Seite 22 ANON. 'IMPROVED ABS/GLASS FIBER COMPOSITES'**

**Beschreibung**

Die Erfindung betrifft mit Füllstoffen verstärkte ABS-Formmassen, die spezielle Styrol-Maleinsäureanhydrid-Copolymere mit hohem Maleinsäureanhydridgehalt enthalten.

Mischungen aus Pfropfpolymerisaten harzbildender Monomerer auf Kautschuken, thermoplastischen Polymerisaten (Harzen) und Füllstoffen sind bekannt (H.G. Elias, "Makromoleküle" Hüthig & Wepf Verlag Basel, Heidelberg, New York 1981, Seiten 994 ff.), denn für viele Anwendungen sind Festigkeit und Steifigkeit unverstärkter Kunststoffe nicht ausreichend. Durch Ausrüstung mit Verstärkungsstoffen können diese Nachteile weitgehend überwunden werden. So werden den Kunststoffen beispielsweise Glasfasern oder modifizierte Mineralien zugesetzt.

Üblicherweise muß zur Verstärkung von Kunststoffen mit Glasfasern zunächst eine geeignete Schlichte auf die Glasfasern, insbesondere auf E-Glasfasern, aufgebracht werden, um zwischen Kunststoff-Matrix und Verstärkungsstoff eine gute Verbundhaftung zu erreichen. In der Praxis werden die Glasfaserstoffe in einer Spinnschlichte präpariert. Diese enthält für die Herstellung von Glasseide hauptsächlich Bindemittel in wäßriger Dispersion zur Bündelung der vielen Einzelfäden sowie geeignete Haftvermittler (z.B. Trimethoxy-aminopropylsilan), die eine bessere Haftung zwischen Füllstoff und Polymermatrix sowie eine gute Einarbeitung der Füllstoffe gewährleisten sollen. Weiterhin können Hilfsmittel für die Verarbeitbarkeit der Fäden in späteren Prozessstufen enthalten sein (siehe K.L. Löwenstein, "The manufacturing technology of continuous glass fibres", Elsevier Scientific Publishing Company, Amsterdam, London, New York, 1973, p. 191-233).

Meist führt die Glasfaserverstärkung nur zu einer partiellen Verbesserung der Eigenschaften. Während Steifigkeit und Festigkeit meist stark ansteigen, nimmt die Elastizität, insbesondere die Schlagzähigkeit, oft deutlich ab. Um eine wirksame Verstärkung bei möglichst geringem Verlust an Zähigkeit zu erreichen, muß eine gute Haftung oder Ankopplung zwischen der Matrix und den Verstärkungsstoffen bestehen.

In der japanischen Patentanmeldung 56/095 953 werden glasfaserverstärkte thermoplastische Formmassen beschrieben, die aus Glasfaser enthaltenden Polymerpellets und glasfaserfreien thermoplastischen Harzen bestehen. Die glasfaserhaltigen Polymerpellets werden durch Polymerisation von Styrol/Acrylnitril in Gegenwart von löslichem, d.h. unvernetztem säurefunktionellem Acrylatkautschuk und Glasfasern in Suspension und anschließende Trocknung erhalten. Bei diesem technisch nur schwer zu steuernden Prozeß (Suspensionspolymerisation und Trocknung in Gegenwart von Glasfasern) wird keine gute Phasenankopplung der Glasfasern an die Thermoplastmatrix erreicht.

In der DE-OS 3 436 602 werden glasfaserverstärkte thermoplastische Harzmassen, bestehend aus einem Harz A) aus einem vinylaromatischen Monomeren (Styrol), Nitrileinheiten (Acrylnitril) und Methacrylaten, einem Harz B) aus Maleinimiden, Vinylaromaten (Styrol) und Vinylmonomeren (Acrylnitril) und einem Harz C) aus vinylaromatischen Monomeren (Styrol) und ungesättigten Nitrilmonomeren (Acrylnitril) und einem Pfropfkautschuk D) beschrieben. A) wird in Gegenwart der Glasfasern durch Suspensionspolymerisation hergestellt. Die Mischung besitzt eine besonders hohe Hitzefestigkeit. Aus den physikalischen Eigenschaften geht hervor, daß die Ankopplung der Glasfasern an das Harz hier nur unzureichend ist.

Das australische Patent 86 60580 lehrt, daß man schlagzähe Harze aus Copolymerisaten aromatischer Vinylverbindungen und ungesättigtem Nitril mit weniger als 15 Gew.-% Kautschukanteilen erhält, wenn man den Kautschuk als Pfropfpolymerisat aus einem Kautschukkern und einer Pfropfhülle aus Vinylaromaten, Vinylcyaniden und Methacrylsäurederivaten hinzugibt. Diese Mischungen können auch Glasfasern enthalten.

Auch diese verstärkten Kunststoffe werden bei mehraxialer Belastung, die z.B. für schlagbeanspruchte Gehäuseteile sehr wichtig ist, nicht immer allen Anforderungen gerecht.

Eine mangelhafte Phasenankopplung zwischen dem Füllstoff und der Kunststoffmatrix kann sich besonders in den Langzeiteigenschaften der aus diesen Materialien hergestellten Formteile negativ auswirken.

In EP-A 303 919 wird eine auch Glasfasern enthaltende Formmasse aus A) einem Copolymerisat aus Vinylaromat und Acrylnitril oder Methacrylnitril und B) einem speziell zusammengesetzten Terpolymerisat aus Vinylaromat, Acrylnitril (oder Methacrylnitril) oder Methylacrylat (oder Methylmethacrylat) und tert. Butylacrylat oder -methacrylat beschrieben. Zur Herstellung dieser Formmassen, die zusätzlich einen Pfropfkautschuk enthalten können, ist jedoch ein im technischen Maßstab nicht verfügbares Monomer notwendig.

Die EP-A 0 137 295 lehrt spezielle thermoplastische Formmassen aus einem Styrol/Acrylnitril-Copolymerisat, einem Styrol/Maleinsäureanhydrid-Copolymerisat und einem Pfropfmischpolymerisat, die aber nur maximal 10 Gew.-% Füllstoffe enthalten können.

Research Disclosure 1991, Nr. 321 lehrt, Styrol/Maleinsäureanhydrid-Copolymerisate glasfaserverstärktem ABS zuzusetzen; allerdings dürfen diese Styrol/Maleinsäureanhydrid-Copolymerisate maximal 35 Gew.-% Maleinsäureanhydrid einpolymerisiert enthalten.

Es besteht daher Bedarf an verstärkten ABS-Formmassen, die auf in unverstärkter Form bewährten und technisch in üblicher Weise herstellbaren ABS-Formmassen beruhen, aber gute Verbundhaftung bzw. Phasenankopplung zwischen der Kunststoffmatrix und den Glasfasern und deshalb verbesserte Eigenschaften besitzen.

Gegenstand der Erfindung sind mit 12 bis 60 Gew.-% Füllstoffen verstärkte ABS-Formmassen enthaltend 0.1 bis 5 Gew.-% eines Copolymerisats von 40 bis 49 Gew.-% Maleinsäureanhydrid und 60 bis 51 Gew.-% Styrol (einschließlich deren Umsetzungsprodukten mit Alkoholen).

Gegenstand der Erfindung sind vorzugsweise ABS-Formmassen aus:

mindestens 35, bevorzugt 40 - 85 Gew.-%, eines Gemisches aus

A) einem Pfropfpolymerisat harzbildender Monomerer auf einen Kautschuk und

B) einem thermoplastischen Harz, sowie

C) 0,1 - 5 Gew.-%, insbesondere 1,5 - 4 Gew.-%, eines Copolymerisats aus 40 - 49 Gew.-% Maleinsäureanhydrid und 60 - 51 Gew.-% Styrol einschließlich deren Umsetzungsprodukten mit Alkoholen) und

D) 12 - 60 Gew.-%, bevorzugt 12 - 50 Gew.-%, besonders bevorzugt 12 - 40 Gew.-%, insbesondere 12 - 25 Gew.-%, Füllstoff.

Die erfindungsgemäßen Formmassen weisen eine verbesserte Haftung zwischen Kunststoff und den Füllstoffen auf und zeigen verbesserte technologische Eigenschaften, wie erhöhte Zähigkeit bei sehr hoher Steifigkeit und Festigkeit.

Gemische aus A) und B) im Sinne der Erfindung sind insbesondere Mischungen aus

A-a) 5 - 70 Gew.-% eines oder mehrerer Pfropfpolymerisate, und

B)-a) 95 - 30 Gew.-% eines oder mehrerer thermoplastischer Harze.

Pfropfprodukte (A-a) sind bevorzugt Polymerisate, die durch Polymerisation harzbildender Monomerer in Anwesenheit eines Kautschuks als Pfropfgrundlage erhalten werden. Der Kautschukanteil ist 5 bis 80 Gew.-% und wird durch das Polymerisationsverfahren mitbestimmt.

Als Kautschuk (Pfropfgrundlage) kommen insbesondere Butadien-, Butadien/Acrylnitril- und Butadien/Styrol-Polymerisate sowie Butadien-Styrol-Blockpolymerisate in Betracht. Ebenfalls verwendbar sind Acrylatpolymerisate, Acrylester-Vinylether-Copolymerisate und EPDM-Terpolymerisate. Harzbildende Monomere sind hauptsächlich Styrol, Gemische aus Styrol und Acrylnitril, bevorzugt im Gewichtsverhältnis 90:10 bis 50:50, Gemische aus Styrol und Methylmethacrylat, bevorzugt im Gewichtsverhältnis 5:95 bis 95:5 sowie Styrol/Acrylnitril/ Methylmethacrylat-Gemische. Die Herstellung der Pfropfpolymerisate ist bekannt:

Man kann die harzbildenden Monomeren (Pfropfmonomeren) in Gegenwart eines Latex des Kautschuks (Pfropfgrundlage) in Emulsion mit Hilfe von radikalischen Initiatoren polymerisieren, wobei die mittleren Teilchendurchmesser der Kautschuklatexteilchen in der Regel 0,04 bis 0,8 µm, vorzugsweise 0,05 bis 0,6 µm, betragen. Ist die Pfropfgrundlage anvernetzt und werden bestimmte Pfropfmonomer/Pfropfgrundlage-Verhältnisse eingehalten, so ist die Teilchengröße des Latex der Pfropfgrundlage auch bestimmend für die Teilchengröße des Pfropfpolymerisats. Die Pfropfhülle aus chemisch an die Kautschukteilchen gebundenen Ketten des Polymerisats der Pfropfmonomeren ist verhältnismäßig dünn und ändert den Durchmesser des Kautschukteilchens nicht wesentlich. "Durchmesser" oder "Teilchengröße" ist hierbei der mittlere Durchmesser $d_{50}$, d.h. der Durchmesser oberhalb dessen und unterhalb dessen die Durchmesser von jeweils 50 Gew.-% der Teilchen liegen. Die Pfropfreaktion ist meist unvollständig. Neben dem eigentlichen Pfropfpolymerisat entsteht auch das nicht gepfropfte Copolymer der Pfropfmonomeren. Deshalb wird das Produkt der Pfropfreaktion auch als "Pfropfprodukt" bezeichnet.

Man kann Pfropfprodukte auch durch Masse-Lösungs- oder Masse-Suspensions-Polymerisation herstellen, wenn man von einem monomerlöslichen Kautschuk ausgeht.

Die Größe der Pfropfkautschukteilchen wird dann durch die Phaseninversion festgelegt und kann sowohl mechanisch durch Rühren als auch durch chemische Beeinflussung des Phasengleichgewichts (Zusatz von Dispergatoren) variiert werden. Im allgemeinen werden so Teilchen mit mittleren Durchmessern ≥ 1 µ erhalten. Das über Lösungs- oder Massepolymerisation erhaltene Pfropfprodukt enthält max. ca. 25 Gew.-% Kautschuk.

Man kann erfindungsgemäß Pfropfprodukte verwenden, deren Teilchen einen Durchmesser von 0,05 bis 20 µ haben, wobei ein erheblicher Teil der Pfropfmonomeren im Inneren des Kautschukteilchens als Homo- oder Copolymerisat includiert sein kann. Bevorzugt sind Teilchendurchmesser von 0,05 bis 1,2 µ, besonders bevorzugt von 0,05 bis 0,6 µ. Es ist auch möglich, mehrere voneinander verschiedene Pfropfprodukte nebeneinander einzusetzen, z.B. zwei Pfropfprodukte, die sich durch den Pfropfgrad bzw. die Pfropfdichte, die Kautschukteilchengröße und/oder die Pfropfdichte unterscheiden. Unter Pfropfgrad ist hierbei die Menge an aufgepfropften Polymer bezogen auf die Gesamtmenge an Kautschukgrundlage, unter Pfropfdichte die Anzahl der aufgepfropften Polymerketten bezogen auf die Gesamtoberfläche der Kautschukgrundlage zu verstehen. Besonders geeignet ist beispielsweise ein Gemisch aus einem Pfropfprodukt aus Kautschukteilchen mit einem mittleren Teilchendurchmesser von 0,35 bis 10 μ und einem Pfropfprodukt aus Kautschukteilchen mit einem mittleren Teilchendurchmesser $d_{50}$ von 0,05 bis 0,32 μ.

Bevorzugt enthalten die Pfropfprodukte 30 bis 80 Gew.-% (insbesondere 40 bis 75 Gew.-%) Kautschuk, besitzen einen mittleren Teilchendurchmesser im Bereich 0,1 bis 0,5 μ und werden in einer solchen Menge eingesetzt, daß die ABS-Formmasse 5 bis 25 Gew.-%, vorzugsweise 5 bis 20 Gew.-% Kautschuk (Pfropfgrundlage) enthält.

Das den zweiten Bestandteil der ABS-Formmasse (B-a) bildende thermoplastische Harz bildet die kontinuierliche Phase (Matrix) und ist ein Polymerisat oder Copolymerisat von Styrol, α-Fiehylstyrol, Acrylnitril und Methylmethacrylat. Bevorzugt sind Polystyrol, Styrol-Acrylnitril-Copolymerisate mit einem Acrylnitril-Gehalt von 20 bis 35 Gew.-% sowie α-Methylstyrol-Acrylnitril-Copolymerisate mit einem Acrylnitril-Gehalt von 20 bis 31 Gew.-%. Das Gewichtsmittel des Molekulargewichts dieser Harze ist 50.000 bis 550.000, die molekulare Uneinheitlichkeit

$$U_n = \frac{\overline{M}_w}{\overline{M}_n} - 1 = 1,0 \text{ bis } 3,5.$$

Wird nur ein Pfropfprodukt zur Herstellung der Formmassen verwendet, so ist es vorteilhaft, wenn die quantitativen Zusammensetzungen der Pfropfmonomeren und der das Harz bildenden Monomeren weitgehend übereinstimmen. Verwendet man zwei Pfropfprodukte, so ist es vorteilhaft, wenn das Mengenverhältnis der Styrol- und Acrylnitrilanteile im Polymerisat der Pfropfhülle der grobteiligeren Pfropfkomponente von dem des Harzes abweicht.

Die Styrol- bzw. α-Methylstyrol-Acrylnitril-Copolymerisate können nach bekannten Verfahren hergestellt werden. Beispielhaft seien genannt: Masse-Polymerisation, Lösungs-Polymerisation, Suspensions-Polymerisation und Emulsions-Polymerisation.

Pfropfprodukt und thermoplastisches Harz werden häufig getrennt hergestellt; beide meist durch Emulsionspolymerisation. Fallen beide als Latex an, so können die Latices gemischt und gemeinsam ausgefällt werden.

Copolymerisate C) im Sinne der Erfindung enthalten große Mengen an einpolymerisiertem Maleinsäureanhydrid und sind selbst nicht thermoplastisch verarbeitbar; sie bestehen aus 40 bis 49 Gew.-%, insbesondere 45 bis 49 Gew.-%, bevorzugt 50 Mol-% Maleinsäureanhydrid-Einheiten und 60 bis 51 Gew.-%, insbesondere 55 bis 51 Gew.-%, bevorzugt 50 Mol-% Styrol-Einheiten, sind also bevorzugt alternierend aufgebaut und können auch als "Styromal" bezeichnet werden.

Ebenfalls geeignet als Copolymerisate C) im Sinne der Erfindung sind Polymerisate, die durch Umsetzung der genannten Copolymerisate aus Styrol und Maleinsäureanhydrid mit Alkoholen, bevorzugt mit Alkanolen mit 1-10 C-Atomen (wie Ethanol, Propanol, Butanol), erhalten werden. Derartige Produkte können formal als Copolymerisate aus Styrol und Maleinsäurehalbester oder als Terpolymerisate aus Styrol, Maleinsäureanhydrid und Maleinsäurehalbester angesehen werden.

Die Copolymerisate C) besitzen Viskositätszahlen [η] von 0,15 bis 1,2 dl/g, vorzugsweise 0,2 bis 1,0 dl/g (gemessen in Dimethylformamid bei 23°C). Diese Copolymerisate sind bekannt und lassen sich durch radikalische Copolymerisation erzeugen.

Als Füllstoff D) werden bevorzugt Glasfasern, insbesondere E-Glasfasern vewendet. Die Glasfasern sind geschlichtet und haben im allgemeinen eine mittlere Länge von 8 bis 15 mm und einen Durchmesser von 0,05 bis 0,5 mm. Glasfasern anderer Länge oder Durchmesser können ebenfalls verwendet werden.

Die erfindungsgemäßen Formmassen können anstelle von oder in Kombination mit Glasfasern auch Glaskugeln, Kohlenstoffasern, Fasern aus flüssig-kristallinen Polymeren oder anorganische Verstärkungsmaterialien enthalten. Dies sind beispielsweise Keramikfüllstoffe, wie Aluminium- und Bornitrid, oder mineralische Füllstoffe, wie Asbest, Talkum, Wollastonit, Microvit, Silikate, Kreide, calzinierte Kaoline, Glimmer und Quarzmehl.

Diese können mit den üblichen Schlichten und Haftvermittlern auf Organosilanbasis, wie z.B. Trimethoxyaminopropylsilan beschichtet sein. Sofern andere Verstärkungsmaterialien als Glasfasern allein verwendet werden, muß wenigstens eine dieser Materialien mit den üblichen Schlichten oder Haftvermittlern auf Organosilanbasis beschlichtet sein.

Darüber hinaus können die erfindungsgemäßen Formmassen auch die üblichen Zusätze, wie Farbstoffe, Pigmente, Stabilisatoren, Flammschutzadditive, Nukleierungs-, Schmier- und Entformungsmittel enthalten.

Für die Herstellung der erfindungsgemäßen Formmassen sind die bei verstärkten Thermoplasten üblichen Verfahren anwendbar. Die Einarbeitung des Füllstoffs D) in die ABS-Formmasse kann auf Knetern, Walzen oder Ein- oder Mehrwellenextrudern bei Temperaturen oberhalb 200°C erfolgen, indem man die Formmassen aus A) und B) vorlegt und das Copolymerisat C) zumischt oder umgekehrt vorgeht und den Verstärkungs- oder Füllstoff D) der homogenisierten Schmelze zusetzt. Es ist auch möglich, alle drei Komponenten A), B) und C) zu vermischen und dann D) der Schmelze zuzusetzen.

Die Menge der Additive wird dabei so bemessen, daß sie die gewünschte Wirkung in der Mischung entfalten können. Die optimale Menge ist leicht durch Vorversuche zu ermitteln.

Die erfindungsgemäßen Formmassen zeichnen sich durch eine erhöhte Ankopplung der Kunststoff-Matrix an die Füllstoffe und durch verbesserte Zähigkeit aus. Sie können mit üblichen Methoden der thermoplastischen Verarbeitung, z.B. durch Spritzgießen oder Extrudieren, in Formteile beliebiger Art überführt werden. Beispiele für solche Formteile sind Armaturenträgertafeln und Rückleuchtengehäuse für Kraftfahrzeuge.

Beispiele

Beispiel 1

Styrol-Maleinsäureanhydrid-Copolymerisate C)

Ein Copolymerisat aus 50 Mol-% Maleinsäureanhydrid und 50 Mol-% Styrol wird hergestellt, indem man 98 Gew.-Teile Maleinsäureanhydrid in 400 Gew.-Teilen Toluol bei einer Temperatur von 60 bis 70°C in einem Reaktor vorlegt. Nach Initiierung mit 0,7 Gew.-Teilen Azobisisobutyronitril werden 104 Gew.-Teile Styrol innerhalb von 3 Stunden bei 60 bis 70°C zudosiert. Das bei der Polymerisation gebildete Polymerisat fällt im Reaktor aus und kann nach beendeter Polymerisation abfiltriert und gewaschen werden. Das Polymerisat enthält 48,5 % Maleinsaureanhydrideinheiten und besitzt einen Staudinger-Index in Dimethylformamid von $[\eta] = 0,22$ dl/g.

Beispiel 2 (Vergleichssubstanz)

Kommerzielles SMA-Copolymerisat (Dylark 332[®] der Firma Arco) aus 85 % Styrol und 15 % Maleinsäureanhydrid, hergestellt durch kontinuierliche Massepolymerisation.

Beispiel 3 (Herstellung einer erfindungsgemäßen Formmasse)

15 Gew.-Teile eines Pfropfpolymerisats, das durch Emulsionspolymerisation von 36 Gew.-Teilen Styrol und 14 Gew.-Teilen Acrylnitril in Gegenwart von 50 Gew.-Teilen eines in Latexform vorliegenden Polybutadiens mit einem mittleren Teilchendurchmesser $(d_{50})$ von 112 nm hergestellt wurde, 15 Gew.-Teile eines Pfropfpolymerisats, das durch Emulsionspolymerisation von 36 Gew.-Teilen Styrol und 14 Gew.-Teilen Acrylnitril in Gegenwart von 50 Gew.-Teilen eines in Latexform vorliegenden Polybutadiens mit einem mittleren Teilchendurchmesser $(d_{50})$ von 400 nm hergestellt wurde, 70 Gew.-Teile eines Styrol/Acrylnitril = 72:28-Copolymerisats mit einem mittleren Molekulargewicht $\overline{M}_W$ von ca. 115.000 mit $\overline{M}_w/\overline{M}_n -1 \leq 1,5$ und 2 Gew.-Teile des in Beispiel 1 beschriebenen Styrol/Maleinsäureanhydrid-Copolymeren wurden in einem Innenkneter im Schmelzzustand vermischt, wonach 20 Gew.-Teile Glasfasern (Glasfaser CS 7911[®] der Bayer AG) zugefügt und mit der Schmelze innig vermischt wurden.

Die resultierende Masse wurde granuliert und durch Spritzgießen bei 240°C in Prüfkörper überführt. Die daran gemessenen Daten sind in Tabelle 1 aufgeführt.

Beispiel 4 (Herstellung einer erfindungsgemäßen Formmasse)

Beispiel 3 wurde wiederholt, wobei jedoch 5 Gew.-Teile des in Beispiel 1 beschriebenen Styrol/Maleinsäureanhydrid-Copolymerisats eingesetzt wurden; alle anderen Einsatzkomponenten und -mengen wurden beibehalten. Die resultierenden Daten sind in Tabelle 1 aufgeführt.

Beispiel 5 (Vergleich)

Beispiel 3 wurde wiederholt, wobei jedoch kein Styrol/-Maleinsäureanhydrid-Copolymerisat zugesetzt wurde; alle anderen Einsatzkomponenten und -mengen wurden beibehalten. Die resultierenden Daten sind in Tabelle 1 aufgeführt.

Beispiel 6 (Vergleich)

Beispiel 4 wurde wiederholt, wobei anstelle des dort eingesetzten Copolymerisats 5 Gew.-Teile des in Beispiel 2 beschriebenen Styrol/Maleinsäureanhydrid-Copolymerisats eingesetzt wurden. Die gemessenen Werte sind in Tabelle 1 aufgeführt.

Die Schlagzähigkeit wurde bei Zimmertemperatur $(a_n^{RT})$ und bei -30°C $(a_n^{-30°C})$ nach ISO 180/1A (Einheit kJ/m$^2$) gemessen, ebenso die Kerbschlagzähigkeit $(a_k^{RT})$ bzw. $(a_k^{-30°C})$. Die Bestimmung der Kugeldruckhärte $(H_c)$ erfolgte nach DIN 53456 (Einheit N/mm$^2$), die Wärmeformbeständigkeit Vicat B wurde nach DIN 53460 (Einheit °C) gemessen.

Die Werte für Reißfestigkeit $\sigma_r$ (Einheit N/mm$^2$) und Zug-E-Modul (Einheit N/mm$^2$) ) wurden durch Zugversuch nach DIN 53455 bzw. DIN 53457, die Werte für Biegespannung $\sigma_b$ (Einheit N/mm$^2$), Biegefestigkeit (Einheit N/mm$^2$) ) und Biege-E-Modul durch Biegeversuch nach DIN 53452 bzw. DIN 53457 ermittelt.

**Tabelle 1** (Prüfdaten der Formmassen)

| Beispiel | $a_n$ RT | $a_n$ -30°C | $a_k$ RT | $a_k$ -30°C | $H_c$ | Vicat B | Reißfestigkeit | Zug-E-Modul | Biege-spannung | Biege-festigkeit | Biege-E-Modul |
|---|---|---|---|---|---|---|---|---|---|---|---|
| 3 | 24,7 | 25,4 | 9,5 | 7,9 | 151 | 109 | 92,9 | 5820 | 145 | 144 | 5250 |
| 4 | 24,9 | 26,9 | 8,7 | 7,7 | 160 | 110 | 100,5 | 6660 | 153 | 153 | 6160 |
| 5 (Vergleich) | 21,1 | 23,1 | 7,4 | 6,4 | 149 | 107 | 91,8 | 5920 | 138 | 137 | 5360 |
| 6 (Vergleich) | 21,8 | 22,4 | 7,6 | 6,6 | 149 | 109 | 92,0 | 5890 | 140 | 139 | 5360 |

Aus den hier beschriebenen Versuchen und den resultierenden in Tabelle 1 zusammengestellten Daten ist zu erkennen, daß die erfindungsgemäßen verstärkten Formmassen das günstigste Gesamteigenschaftsniveau, insbesondere eine Kombination aus hoher Zähigkeit, guter Wärmeformbeständigkeit und hohen Modulwerten zeigen.

**Patentansprüche**

1. Mit 12 bis 60 Gew.-% Füllstoffen verstärkte ABS-Formmassen, enthaltend 0,1 bis 5 Gew.-% eines Copolymerisats aus 40 bis 49 Gew.-% Maleinsäureanhydrid und 60 bis 51 Gew.-% Styrol, einschließlich deren Umsetzungsprodukte mit Alkohol.

2. ABS-Formmasse gemäß Anspruch 1 aus
mindestens 35 Gew.-% eines Gemisches aus

   A) gepfropftem Kautschuk und

   B) thermoplastischem Harz, sowie

   C) 0,1 bis 5 Gew.-% eines Copolymerisats von 40 bis 49 Gew.-% Maleinsäureanhydrid und 60 bis 51 Gew.-% Styrol,(einschließlich deren Umsetzungsprodukten mit Alkohol) und

   D) 12 bis 60 Gew.-% Füllstoff.

3. ABS-Formmasse nach Anspruch 2, worin das Gemisch aus A) und B) aus 5 bis 70 Gew.-% A) und 95 bis 30 Gew.-% B) besteht.

4. ABS-Formmasse nach Anspruch 2, worin A) ein Pfropfpolymerisat von Styrol und Acrylnitril auf Polybutadien und B) ein Copolymerisat von Styrol und Acrylnitril ist.

5. ABS-Formmasse nach Anspruch 2, worin D) Glasfasern einer Länge von 8 bis 15 mm sind.

6. Verwendung der Formmasse gemäß Anspruch 1 zur Herstellung von Formteilen.

**Claims**

1. ABS moulding compositions reinforced with 12 to 60% by weight of fillers and containing 0.1 to 5% by weight of a copolymer of 40 to 49% by weight of maleic anhydride and 60 to 51% by weight of styrene, including reaction products thereof with alcohols.

2. ABS moulding compositions as claimed in claim 1 of at least 35% by weight of a mixture of

   A) grafted rubber and
   B) thermoplastic resin and also
   C) 0.1 to 5% by weight of a copolymer of 40 to 49% by weight of maleic anhydride and 60 to 51% by weight of styrene (including reaction products thereof with alcohol) and
   D) 12 to 60% by weight of filler.

3. ABS moulding compositions as claimed in claim 2, in which the mixture of A) and B) consists of 5 to 70% by weight of A) and 95 to 30% by weight of B).

4. ABS moulding compositions as claimed in claim 2, in which A) is a graft polymer of styrene and acrylonitrile on polybutadiene and B) is a copolymer of styrene and acrylonitrile.

5. ABS moulding compositions as claimed in claim 2, in which D) consists of glass fibers having a length of 8 to 15 mm.

6. The use of the moulding compositions claimed in claim 1 for the production of mouldings.

**Revendications**

1. Matières moulables ABS renforcées de 12 à 60 % en poids de charges, contenant 0,1 à 5 % en poids d'un copolymère composé de 40 à 49 % en poids d'anhydride maléique et de 60 à 51 % en poids de styrène, y compris leurs produits de réaction avec l'alcool.

2. Matière moulable ABS selon la revendication 1, composée d'au moins 35 % en poids d'un mélange de

    A) un caoutchouc greffé et
    B) une résine thermoplastique, ainsi que
    C) 0,1 à 5 % en poids d'un copolymère composé de 40 à 49 % en poids d'anhydride maléique et de 60 à 51% en poids de styrène, (y compris leurs produits de réaction avec l'alcool) et
    D) 12 à 60 % en poids de charge.

3. Matière moulable ABS selon la revendication 2, dans laquelle le mélange de A) et B) est constitué de 5 à 70 % en poids de A) et de 95 à 30 % en poids de B).

4. Matière moulable ABS selon la revendication 2, dans laquelle A) est un polymère greffé de styrène et d'acrylonitrile sur du polybutadiène et B) un copolymère de styrène et d'acrylonitrile.

5. Matière moulable ABS selon la revendication 2, dans laquelle D) est constitué par des fibres de verre de 8 à 15 mm de long.

6. Utilisation de la matière moulable selon la revendication 1 pour la fabrication de pièces moulées.